# EUROPEAN PATENT SPECIFICATION

(11) **EP 1 496 676 B1**
(45) Date of publication and mention of the grant of the patent: **30.11.2011**
(21) Application number: 03445091.6
(22) Date of filing: 09.07.2003
(51) Int. Cl.: H04M 1/03, H04M 1/02

(54) **Speaker arrangement for foldable terminals**
Lautsprecheranordnung für klappare Geräte
Arrangement de haut-parleurs pour terminals pliables

(43) Date of publication of application: 12.01.2005
(73) Proprietor: Sony Ericsson Mobile Communications AB, 221 88 Lund (SE)
(72) Inventor: stenmark, Fredrik, 211 52 Malmö (SE)
(74) Representative: Aurell, Henrik

(56) References cited:
- WO-A-03/007651
- DE-A- 4 410 995
- US-A- 5 915 015
- PATENT ABSTRACTS OF JAPAN vol. 2003, no. 11, 5 November 2003 (2003-11-05) & JP 2003 198696 A (FOSTER ELECTRIC CO LTD), 11 July 2003 (2003-07-11)

## Description

### Field of the invention

The present invention relates generally to a foldable radio communication terminal, comprising a speaker for conveying audio information to a user of the communication terminal. More specifically the invention relates to a communication terminal wherein such a speaker makes use of a cavity formed in a hinge of said foldable terminal as a resonance chamber.

### Background

The mobile phone industry has had an enormous development both regarding quality of service and transmission capabilities, as well as the technology for producing advanced communications terminals. In only a couple of decades the communication systems have gone from analogue to digital, and at the same time the dimensions of the communication terminals have gone from briefcase size to the pocket size phones of today. Still today, mobile phones are getting smaller and smaller and the size is generally considered to be an important factor for the end customer. The development in electronics has made it possible to miniaturise the components of the terminals, at the same time making the terminals capable of performing more advanced functions and services. The development of new transmission schemes, the so-called 3^{rd} generation mobile system standing at the door and the 4^{th} generation to be expected maybe ten years later, also provides the possibility to convey more advanced data to the wireless communication terminals, such as real time video.

In order to benefit from the capabilities of the transmission system, the future generation of phones will have a large display in order to perform multimedia input and output, and the picture quality will be of high importance. Still, the keypad or keyboard must be large enough to allow people to press one key at the time. With the development of the communication systems and the capabilities of multimedia functions, the demands on the sound quality from the terminals will also increase. In the next generation of terminals using W-CDMA technique, it will be possible to use a wider audio frequency band. The speaker of the terminal may also be used as a ringer instead of a traditional buzzer, for a single tone or polyphonic ring signals, and as a hand free speaker built-in into the phone. Normally, these functions are performed by a second speaker mounted in the back of the phone, but combined speakers for two or all three of these functions may also be employed.

The performance of the speaker is to a high extent dependent on the back volume, i.e. the acoustic resonance cavity behind the speaker. For best performance, the back volume should be sealed. In a normal case the whole phone is used as back volume, but it is almost impossible to seal a phone. Furthermore, due to the general end user demand to provide miniaturised terminals, little space is available for the speaker and the resonance chamber. One solution to this problem of miniaturisation of communication terminals is proposed in WO 00/38475, in which the acoustic resonance chamber of the speaker is completely or partly located in the electromagnetic resonance chamber of the antenna. The use of a single resonance chamber instead of two separate ones makes it possible to manufacture smaller communication devices. According to the proposed solutions the speaker is placed outside the resonance chamber, the backside of the speaker being connected to the resonance chamber by at least one acoustic channel. However, the arrangement of the speaker beside the resonance chamber has some drawbacks. First of all the acoustic channel has to be properly sealed. Furthermore, the speaker and chamber will both add to the thickness of the terminal.

### Summary of the invention

It is consequently a general object of the present invention to provide a compact speaker arrangement for a radio communication terminal. An aspect of this object is to provide a speaker solution which overcomes the deficiencies related to the state of the art terminal as recited above. More specifically, it is an object to provide a speaker arrangement for a communication terminal making it possible to decrease the outer terminal dimensions.

According to the present invention, this object is fulfilled by communication terminal, comprising a first terminal member and a second terminal member, a hinge device connecting said terminal members by which the terminal can be folded and unfolded, and a speaker. The invention is distinguished in that said hinge device defines a cavity to which said speaker is acoustically connected.

In one general embodiment, said speaker is placed inside said cavity. Said cavity may be substantially cylindrical.

Preferably, said cavity is sealed from the remainder of the terminal. In one embodiment, a first sound output aperture is formed in a first end portion of said hinge. Preferably, said speaker is placed adjacent to said first sound aperture.

A second sound output aperture may also be formed in a second end portion of said hinge, opposite to said first end portion.

In one embodiment, a second speaker is placed adjacent to said second sound aperture.

In an alternative embodiment, a sound output aperture is formed in a side portion of said hinge.

Preferably, said speaker is a rod shaped type speaker having a rectangular membrane.

In another general embodiment, said speaker is placed outside said cavity, coupled by a sound opening to said cavity.

Preferably, said sound opening is sealed from the remainder of the terminal.

In one embodiment, a first sound output aperture is formed in a first end portion of said hinge. Furthermore, a second sound output aperture may be formed in a second end portion of said hinge, opposite to said first end portion.

In an alternative embodiment, a sound output aperture is formed in a side portion of said hinge.

In one particular embodiment, said speaker is coupled through a backside portion thereof to said cavity.

In an alternative embodiment, said speaker is coupled through a side portion thereof to said cavity.

In one embodiment, said speaker comprises a membrane, a backside of said membrane being coupled to said cavity, and a front side of said membrane being coupled to the exterior of the terminal by a first sound output aperture.

Preferably, said first sound output aperture is arranged beside said hinge and is directed sideways out from the terminal parallel to said hinge

Furthermore, a second sound output aperture may be formed in a first end portion of said hinge, adjacent to said first sound output aperture.

Advantageously, said speaker is coupled to said cavity through a sound opening which provides a connection which is sealed from the remainder of the terminal.

In one embodiment, said cavity acts as a front volume resonator for said speaker.

The communication terminal is preferably of a clamshell type design, each of said terminal members carrying user interface portions. Alternatively, said first terminal member is a terminal body carrying a user interface, and said second terminal member is a foldable protective cover.

### Brief description of the drawings

Further features and advantages of the present invention will become more apparent from the following description of preferred embodiments, with reference to the accompanying drawings, on which
Fig. 1 schematically shows a foldable terminal devised according to a first embodiment of the present invention, in a folded state;
Fig. 2 schematically illustrates the embodiment of Fig. 1, in an unfolded state;
Fig. 3 schematically illustrates a foldable terminal devised according to a second embodiment of the present invention, in a folded state;
Fig. 4 schematically illustrates the embodiment of Fig. 2, in an unfolded state;
Fig. 5 schematically shows a foldable terminal devised according to a third embodiment of the present invention, in a folded state;
Fig. 6 schematically illustrates the embodiment of Fig. 5, in an unfolded state;
Fig. 7 schematically shows a perspective view of a foldable terminal devised according to a fourth embodiment of the present invention, in a folded state;
Fig. 8 schematically illustrates the embodiment of Fig. 7, in an unfolded state;
Fig. 9 illustrates a disassembled hinge device according to an embodiment of the invention, applicable to the terminal shown in Fig. 1;
Fig. 10 illustrates the embodiment of Fig. 9 when assembled;
Fig. 11 illustrates a disassembled hinge device according to another embodiment of the invention, applicable to the terminal shown in Fig. 1;
Fig. 12 illustrates the embodiment of Fig. 11 when assembled;
Fig. 13 illustrates a disassembled hinge device according to yet another embodiment of the invention, applicable to the terminal shown in Fig. 7;
Fig. 14 illustrates the embodiment of Fig. 13 when assembled;
Fig. 15 schematically illustrates a foldable terminal devised according to variant of the embodiment of Fig. 1, in a folded state;
Fig. 16 schematically illustrates a modified version of a foldable terminal devised according to the embodiment of Fig. 15, in a folded state;
Fig. 17 schematically illustrates the embodiment of Fig. 15, in an unfolded state; and
Fig. 18 schematically illustrates a foldable terminal devised according to variant of the embodiment of Fig. 7, in an unfolded state.

### Detailed description of preferred embodiments

The present description refers to a foldable communications terminal as a device in which to implement the speaker configuration according to the present invention. The communication terminal includes all foldable mobile equipment devised for radio communication with a radio station, which radio station also may be a mobile terminal or e.g. a stationary base station. Consequently, the term "communication terminal" includes mobile phones, pagers, communicators, electronic organisers, smart phones, PDA:s (Personal Digit Assistants), vehicle-mounted radio communication devices or the like, as well as portable laptop computers devised for wireless communication in for instance WLAN (Wireless Local Area Network). Hence, although the structure and characteristics of the speaker design according to the invention is mainly described herein, by way of example, in the implementation in a mobile phone, this is not to be interpreted as excluding the implementation of the inventive design in other types of terminals, such as those listed above. Furthermore, it should be emphasised that the term "comprising" or "comprises" when used in this description and in the appended claims to indicate included features, elements or steps, is in no way to be interpreted as excluding the presence of other features, elements or steps than those expressed or stated.

A typical example of a state of the art mobile phone comprises an antenna, a power supply, generally a battery, a user interface for data, audio and image, possibly video, interaction and communication. The interface comprises often a keypad and a display, which basically set the limit of how small the terminal can be. To be able to work as a standard phone for voice interaction, the terminal also includes a microphone and a speaker. Circuitry of the phone, such as radio transmission and reception electronics, are generally carried on a printed wire board PWB, which in turn is supported and protected by a cover.

A particular type of terminal is the so called clamshell phone, which have been marketed for a number of years. The clamshell design involves two terminal members, hinged together at respective short ends, such that the terminal may be unfolded to reveal its user interface. A clamshell terminal can host a larger user interface, e.g. a larger display, without increasing the total length of the terminal when folded, compared to a standard non-foldable terminal. With the increasing development of advanced data transmission and presentation capabilities, such as images and video, a large display will be a desirable feature.

As mobile phones are getting smaller, the space for acoustical transducers and the size of the acoustical transducers themselves shrink. To solve this issue, many speaker vendors develop square or oval components to cope with the demands of saving space. In clamshell phones of today, transducers are often placed in the upper part of the clamshell. The reason for this is so one can hear the device clearly, and also that a lot of the space in the lower part is often occupied by a battery.

To fit a transducer, or speaker, in a mobile phone demands a lot from the surroundings. In order to get low frequency output, one needs sealed conditions. Furthermore, in order to enable high frequency performance i.e. treble, one needs a tuned front port with a speaker-matched front volume and openings. The PWB and the casing of the phone often introduce leakage that deteriorates the sound performance and quality.

The present invention provides a solution to this problem, by coupling the speaker to a cavity defined in the hinge. This simplifies the acoustical solution for the terminal, and enables use of a cavity in a way that it has not been used before. Furthermore, the hinge cavity can be more properly sealed than the rest of the terminal body, which involves a lot of fittings for components, the PWB and the connection of included parts.

In a first general embodiment, a speaker is placed in either of two halves of a clamshell phone, such that the speaker is coupled to the hinge cavity. The speaker is thereby allowed to resonate into the hinge cavity. Preferably one end of the hinge, i.e. an end portion at the side of the terminal, is provided with a sound output aperture for radiating sound to the outside world. Preferably, speaker is sealed about an opening to the hinge cavity. One end of a speaker membrane is coupled through said sound opening to the hinge cavity. The opposing side of the membrane may be coupled to the exterior of the terminal through a separate aperture, alternatively this opposing side is simply covered.

In a second general embodiment, a small and preferably rectangular membrane device is placed inside the hinge cavity, which will optimise the bass performance, enabling a rich low frequency output as well as a sealed condition as the interior of the hinge is closed and preferably does not incorporate any other components.

Detailed description of preferred embodiment corresponding to these general embodiments will now be provided, with reference to the accompanying drawings.

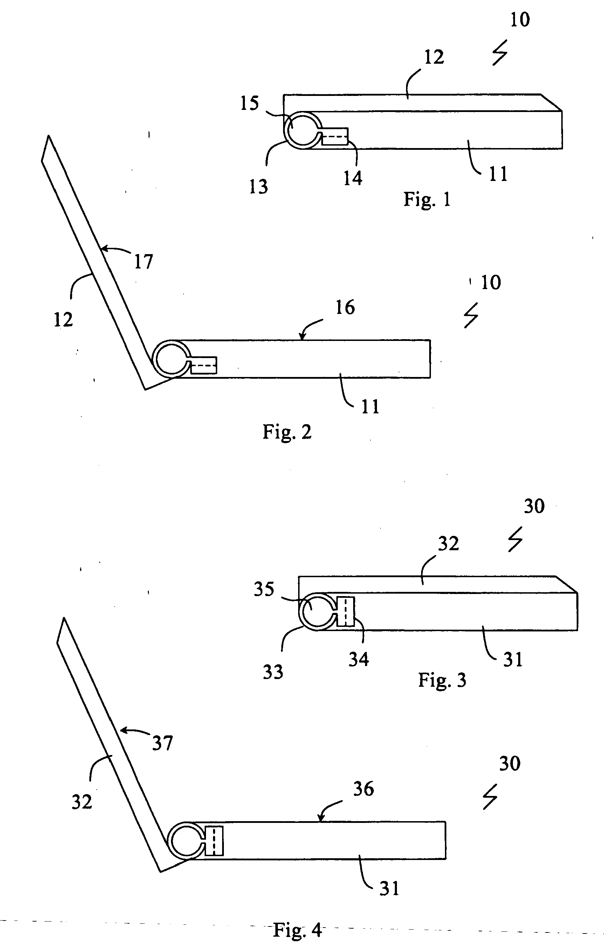

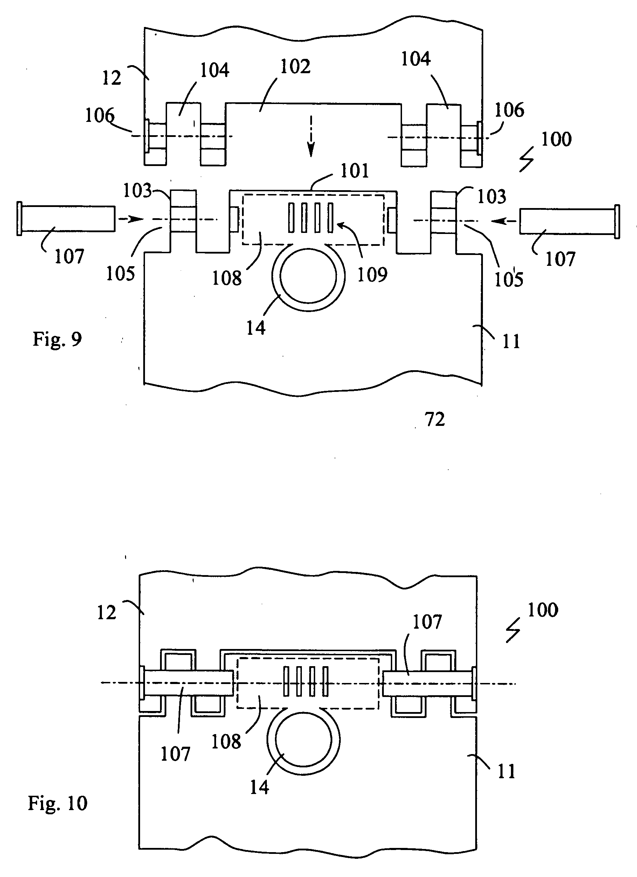

A first embodiment of a clamshell terminal incorporating the present invention is illustrated, by way of example, in Fig. 1. The terminal 10 comprises first 11 and second 12 terminal members, connected to each other by a hinge device 13 arranged at a short end portion of first terminal member 11. In Fig. 1 terminal 10 is shown in a folded state, at which the terminal members are arranged close to each other. Hinge 13 is purely schematically illustrated in Figs 1 to 8, whereas usable detailed solutions for the hinge device 13 are disclosed in Figs 9 to 14. In accordance with the invention, hinge device 13 defines a cavity 15 therein, which cavity 15 is preferably sealed from the remainder of the terminal bodies 11 and 12. A speaker or transducer 14, having a membrane indicated by the dashed line, is acoustically connected at one side of the membrane to cavity 15, such that sound generated by speaker 14 propagates into cavity 15. A sound output aperture is further included, though not shown in this highly schematic drawing, e.g. at an end portion of the hinge device 13, such as the end facing up from the drawing. In an alternative embodiment, a sound output aperture from cavity 15 is defined at a side portion, such as downwards in the drawing. Plural apertures are of course also possible.

Fig. 2 illustrates the embodiment of Fig. 1 in an unfolded state. When unfolded, a user interface otherwise protected is revealed. Such a user interface may include a keypad 16 at the lower terminal member 11, and a display 17 at the upper terminal member 12.

Figs 3 and 4 illustrate a variant of the embodiment of Fig. 1. As before, the terminal 30 comprises first 31 and second 32 terminal members, connected to each other by a hinge device 33. Hinge device 33 defines a cavity 35 therein, which cavity 35 is preferably sealed. A speaker 34, having a membrane indicated by the dashed line, is acoustically connected at one side of the membrane to cavity 35, such that sound generated by speaker 34 propagates into cavity 35. One or more sound outputs are further included. The particular embodiment of Figs 3 and 4 differ from the one in Figs 1 and 2 in the orientation of speaker 34. Whereas the embodiment of Fig. 1 includes a speaker 14 placed with its membrane in a principal plane of the first terminal member 11, the membrane of speaker 34 in the embodiment of Fig. 3 is oriented perpendicular to the principal plane of terminal member 31, and faces directly towards the hinge cavity 35. Such a solution may provide easier sealing about the sound opening where speaker 34 and hinge cavity 35 meet. Fig. 4 illustrates the embodiment of Fig. 3 in an unfolded state, revealing a user interface, such as a keypad 36 and a display 37.

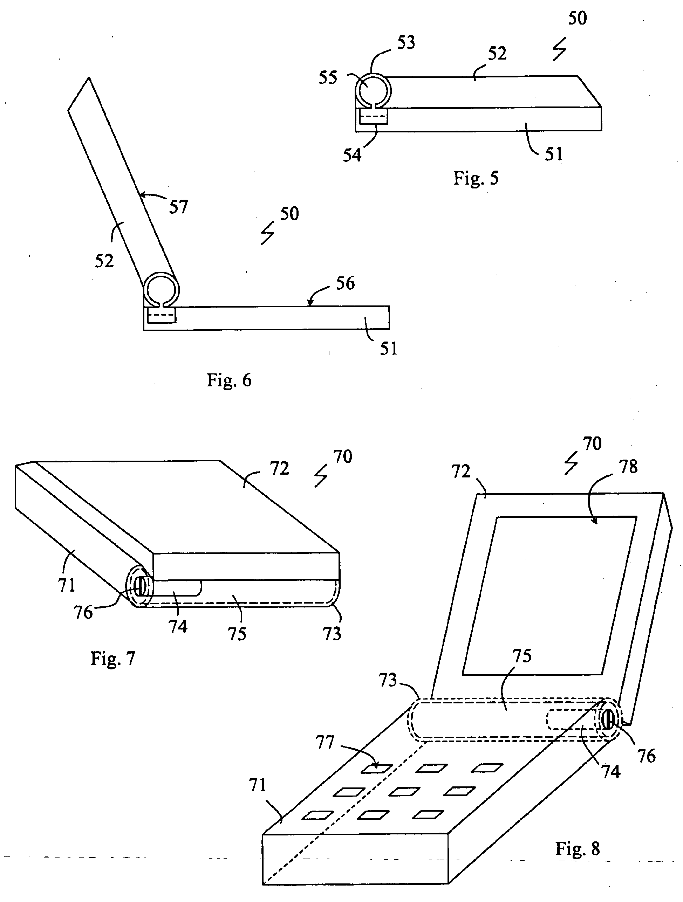

Figs 5 and 6 illustrates another variant of the embodiment of Fig. 1. As before, the terminal 50 comprises first 51 and second 52 terminal members, connected to each other by a hinge device 53. Hinge device 53 defines a cavity 55 therein, which cavity 55 is preferably sealed. A speaker 54, having a membrane indicated by the dashed line, is acoustically connected at one side of the membrane to cavity 55, such that sound generated by speaker 54 propagates into cavity 55. One or more sound outputs are further included. The particular embodiment of Figs 5 and 6 differ from the one in Figs 1 and 2 in that the hinge device 53 is substantially placed on top of first terminal member 51, whereas the second terminal member 52 extends substantially straight from the hinge device 53. Speaker 54 is placed with its membrane in a principal plane of the first terminal member 51, and at the same time, facing directly towards the hinge cavity 55. Fig. 6 illustrates the embodiment of Fig. 5 in an unfolded state, revealing a user interface, such as a keypad 56 and a display 57.

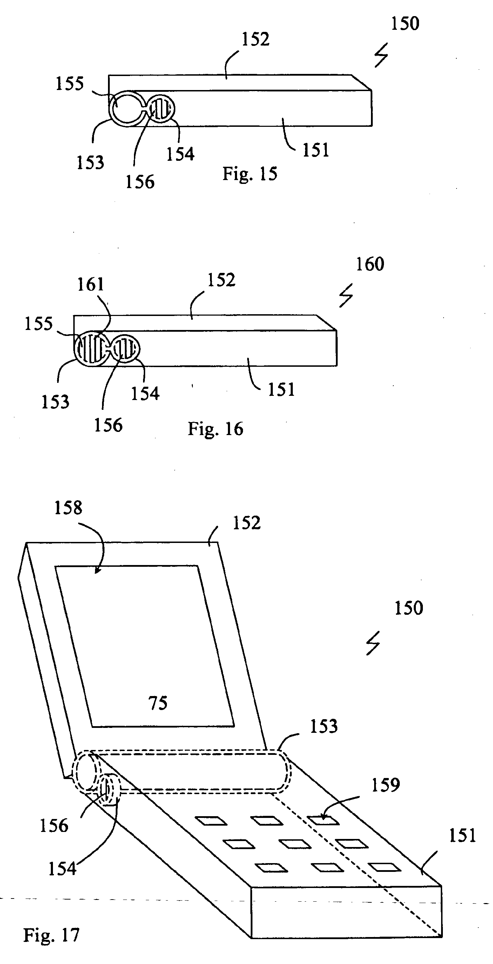

Figs 15 and 17 illustrates yet another variant of the embodiment of Fig. 1. As before, the terminal 150 comprises first 151 and second 152 terminal members, connected to each other by a hinge device 153. Hinge device 153 defines a cavity 155 therein, which cavity 155 is preferably sealed. A speaker 154, having a membrane indicated by the dashed line, is acoustically connected at a backside of the membrane to cavity 155, such that sound generated by speaker 154 propagates into cavity 155. Speaker 154 is placed with its membrane facing sideways out from the first terminal member 151. A sound output aperture 156, indicated by a grid in the drawing, is further provided at the front side of the membrane, coupling sound generated by speaker 154 to the atmosphere surrounding the terminal. Cavity 155 is preferably completely sealed, the only opening being the connection to speaker 154. Cavity 155 thereby acts as a back volume for speaker 154, rendering optimised low base performance. Fig. 17 illustrates a perspective view of the embodiment of Fig. 15 in an unfolded state, revealing a user interface, such as a keypad 159 and a display 158.

Fig. 16 illustrates a variant of the embodiment of Figs 15 and 17, in which terminal 160 further comprises a sound output aperture 161, indicated by a grid in the drawing, also facing sideways out from the first terminal member 151. With such a design, cavity 155 will instead act as a bass reflex tube for speaker 154.

A second embodiment of a clamshell terminal incorporating the present invention is illustrated, by way of example, in Fig. 7. The terminal 70 comprises first 71 and second 72 terminal members, connected to each other by a hinge device 73 arranged at a short end portion of first terminal member 71. In Fig. 7 terminal 70 is shown in a folded state, at which the terminal members are arranged close to each other. Hinge device 73 defines a cavity 75 therein, which cavity 75 is preferably sealed from the remainder of the terminal bodies 71 and 72. A miniaturised speaker or transducer 74 is placed inside cavity 75. Preferably, said a rod shaped speaker 74 is employed, having a rectangular membrane (not shown). Said membrane extends in the longitudinal direction of speaker rod shaped 74, in any pre-selected direction relative to the principal plane of terminal member 71. With this design, hinge cavity 75 provides optimised bass performance for speaker 74. At least one sound output aperture 76 is formed at an end portion of the hinge 73, preferably at the end portion at which speaker 74 is mounted. Another sound output aperture may be formed in the opposing end portion, i.e. at the end facing right in Fig. 7.

Fig. 8 illustrates the embodiment of Fig. 7 in an unfolded state, revealing a user interface including a keypad 77 at the lower terminal member 71, and a display 78 at the upper terminal member 72. The user interfaces 77 and 78 are purely schematically indicated, and may be formed in alternative ways. For one thing, the keypad may be replaced by a touch-sensitive display, as is well known in the prior art.

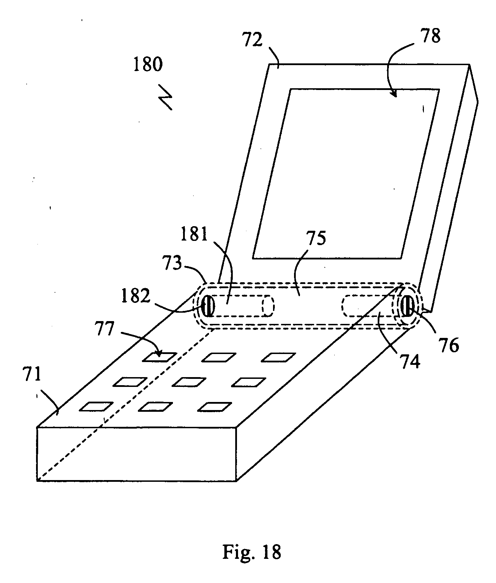

Fig. 18 illustrates a terminal 180, which is a variant of the embodiment of Figs 7 and 8, with the same reference numerals used for identical elements. However, in addition to the elements of Figs 7 and 8, terminal 180 comprises a second speaker 181, arranged at the opposite end of hinge 73. A second sound output aperture 182 is formed at that end portion of the hinge 73. Preferably, speakers 74 and 181 are driven by a stereo audio unit (not shown), such that terminal 180 is capable of providing stereo sound.

Figs 9 and 10 illustrate one exemplary design for a hinge device 100 with a speaker 14 coupled to a hinge cavity 108, according to an embodiment of the invention. In the way that speaker 14 is illustrated in Fig. 9, this embodiment is applicable to the terminal 10 of Figs 1 and 2. However, the speaker may just as well be coupled to cavity 108 in the manner disclosed in Figs 3 and 4, Figs 5 and 6, or Figs 15 to 17. Fig. 9 illustrates the hinge device 100 in a disassembled state, with terminal members 11 and 12 separated, whereas Fig. 10 illustrates the same hinge device 100 when assembled.

The particular, yet exemplary, design of Figs 9 and 10 is symmetric with respect to a longitudinal axis through the terminal members 11 and 12. The hinge device comprises a first pair of ears 103 secured to terminal member 11, devised to fit in recessed portions 104 in the second terminal member 12. The recessed portions 104 each form one pair of ears, in which a through bore 106 is formed. A corresponding through bore 105 is formed in each ear 103. A centre portion 101 of hinge device 100 encloses a sealed cavity 108, indicated by the dashed line in Figs 9 and 10. Cavity 108 is preferably cylindrical, and its interior is coupled to speaker 14. The specific shape of cavity 108 is not critical, though, but it is important that it can be sealed properly. A sound aperture 109, here shown in the shape of repeated slots, is formed in a side portion of centre portion 101. Preferably, said sound output aperture is placed on centre portion 101 such that it is exposed in both a folded and an unfolded state of the terminal. Pins 107 are devised to fit through communicating through bores 105 and 106, and preferably into a bore in centre portion 101.

In Fig. 10, the hinge device 100 has been assembled by introduction of pins 107. Pins 107 may be secured to the hinge device by means of a threaded engagement with one of the terminal members 11 or 12. Alternatively, pins 107 may be latched onto the hinge device 100. A centre axis of pins 107 also defines a rotation axis for hinge device 100, indicated by the dash-dotted line in Fig. 10.

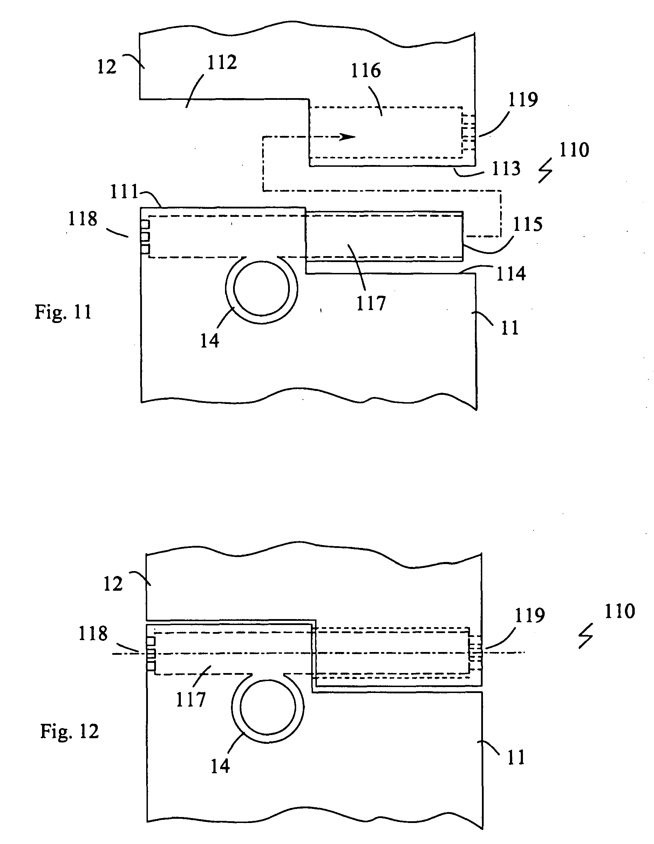

Figs 11 and 12 illustrate another exemplary design for a hinge device 110 with a speaker 14 coupled to a hinge cavity 117, according to an embodiment of the invention. Also this embodiment is particularly applicable to the terminal 10 of Figs 1 and 2, but the speaker may just as well be coupled to cavity 117 in the manner disclosed in Figs 3 and 4, Figs 5 and 6, or Figs 15 to 17. Fig. 11 illustrates the hinge device 110 in a disassembled state, and Fig. 12 illustrates the same hinge device 110 when assembled.

The design of Figs 11 and 12 employs a protruding portion 115 extending along a hinge rotation axis from first terminal member 11. A corresponding recessed portion 116 is formed in the second terminal member 12. Assembly of the hinge device 110 is obtained by introducing said protruding portion 115 into said recessed portion 116, in the manner indicated by the dash-dotted line in Fig. 11, to the assembled state indicated in Fig. 12. A cavity 117 is formed in hinge device 110, which cavity 117 extends substantially all the way through the hinge in this embodiment, and particularly into protruding portion 115. Cavity 117 is preferably cylindrical, and its interior is coupled to speaker 14. A first sound aperture 118, here shown in the shape of repeated slots, is formed in an end portion of cavity 117. A second sound aperture 119 may be formed at the opposing end of hinge device 110, as is indicated in the drawing.

In Fig. 12, the hinge device 110 has been assembled by introduction of protruding portion 115 into recessed portion 116. The terminal members 11 and 12 may e.g. be secured to each other at the hinge device by means of a threaded engagement between the protruding portion 115 and an end plug member (not shown) introduced from the side of second terminal member 12 through the bottom of recessed portion 116. Alternatively, protruding member 115 may be latched into engagement with recessed portion 116. A centre axis of protruding member 115 defines a rotation axis for hinge device 110, indicated by the dash-dotted line in Fig. 12.

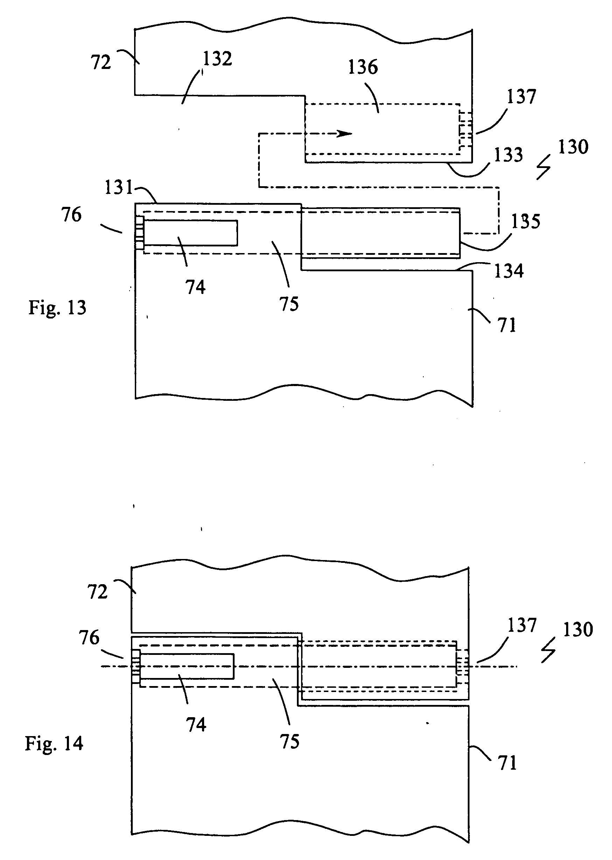

Figs 13 and 14 illustrate an exemplary design for a hinge device 130 with a speaker 74 mounted inside a hinge cavity 75, according to an embodiment of the invention. This embodiment is particularly applicable to the terminal 70 of Figs 7 and 8. However, it is of course equally applicable the terminal of Fig. 18. Fig. 13 illustrates the hinge device 130 in a disassembled state, and Fig. 14 illustrates the same hinge device 130 when assembled.

Apart from the speaker 74, the design of Figs 13 and 14 employs the same basic design as the embodiment of Figs 11 and 12. A protruding portion 135 extends along a hinge rotation axis from first terminal member 71. A corresponding recessed portion 136 is formed in the second terminal member 72. Assembly of the hinge device 130 is obtained by introducing said protruding portion 135 into said recessed portion 136, in the manner indicated by the dash-dotted line in Fig. 13, to the assembled state indicated in Fig. 14. A cavity 75 is formed in hinge device 130, which cavity 75 extends substantially all the way through the hinge in this embodiment, and particularly into protruding portion 135. Cavity 75 is preferably cylindrical, and houses rod shaped speaker 74. A first sound aperture 76, here shown in the shape of repeated slots, is formed in an end portion of cavity 75. A second sound aperture 137 may be formed at the opposing end of hinge device 130, as is indicated in the drawing. In an alternative embodiment, the sound aperture is placed on a side portion, like aperture 109 in Fig. 9.

In Fig. 14, the hinge device 130 has been assembled by introduction of protruding portion 135 into recessed portion 136. The terminal members 71 and 72 may be secured to each other at the hinge device by any of the means discussed with reference to Fig. 12. A centre axis of protruding member 135 defines a rotation axis for hinge device 130, indicated by the dash-dotted line in Fig. 14.

The foregoing has described the principals, preferred embodiments and modes of operation of the present invention. However, the invention should not be construed as being limited to the particular embodiments discussed above. It should be noted that the illustrated particular embodiments of the hinge device according to the invention have been highly schematic, leaving out elements and functions of minor relevance to the invention. Such elements and functions may e.g. include a spring member devised to bias the terminal members in either the folded or the unfolded state. Furthermore, one of the terminal members may be a simple protective cover. However, if both terminal members carry electronic elements, some type of communicative coupling must be incorporated in the hinge device, in order to relay data signals and power between the terminal members. It should also be mentioned that other hinge embodiments and ways of assembly than those illustrated herein may be employed. For one thing, one of the terminal members may be split into two halves which are assembled about a rotation axis of the other terminal member. Thus, the above described embodiments should be regarded as illustrative rather than restrictive, and it should be appreciated that variations may be made in those embodiments by those skilled in the arts without departing from the scope of the present invention as defined in the appended claims.

## Claims

1. Communication terminal (70), comprising a first terminal member (71) and a second terminal member (72), a hinge device (73) connecting said terminal members by which the terminal can be folded and unfolded, and a speaker (74), wherein said hinge device defines a cavity (75) to which said speaker is acoustically connected, wherein said speaker (74) is placed in either of said first terminal member (71) or said second terminal member, such that the speaker is coupled to said cavity (75),
**characterized in that** the acoustical connection between the speaker (74) and the cavity (75) is such that it allows the speaker (74) to resonate inside said cavity (75).

2. The communication terminal as recited in claim 1, **characterised in that** said speaker is placed inside said cavity.

3. The communication terminal as recited in claim 2, **characterised in that** said cavity is substantially cylindrical.

4. The communication terminal as recited in claim 2, **characterised in that** said cavity is sealed from the remainder of the terminal.

5. The communication terminal as recited in claim 2, **characterised in that** a first sound output aperture (76) is formed in a first end portion of said hinge.

6. The communication terminal as recited in claim 4, **characterised in that** said speaker is placed adjacent to said first sound aperture.

7. The communication terminal as recited in claim 4, **characterised in that** a second sound output aperture (182) is formed in a second end portion of said hinge, opposite to said first end portion.

8. The communication terminal as recited in claim 7, **characterised in that** a second speaker (181) is placed adjacent to said second sound aperture.

9. The communication terminal as recited in claim 2, **characterised in that** a sound output aperture is formed in a side portion of said hinge

10. The communication terminal as recited in claim 2, **characterised in that** said speaker is a rod shaped type speaker having a rectangular membrane.

11. The communication terminal (10) as recited in claim 1, **characterised in that** said speaker (14) is placed outside said cavity (15), coupled by a sound opening to said cavity.

12. The communication terminal as recited in claim 11, **characterised in that** said sound opening provides a connection which is sealed from the remainder of the terminal.

13. The communication terminal as recited in claim 11, **characterised in that** a first sound output aperture (118) is formed in a first end portion of said hinge.

14. The communication terminal as recited in claim 13, **characterised in that** a second sound output aperture (119) is formed in a second end portion of said hinge, opposite to said first end portion.

15. The communication terminal as recited in claim 11, **characterised in that** a sound output aperture (109) is formed in a side portion of said hinge (100).

16. The communication terminal (50) as recited in claim 11, **characterised in that** said speaker (54) is coupled through a backside portion thereof to said cavity (55).

17. The communication terminal (10) as recited in claim 11, **characterised in that** said speaker (14) is coupled through a side portion thereof to said cavity (15).

18. The communication terminal (150) as recited in claim 17, **characterised in that** said speaker (154) comprises a membrane, a backside of said membrane being coupled to said cavity (155), and a front side of said membrane being coupled to the exterior of the terminal by a first sound output aperture (154).

19. The communication terminal as recited in claim 18, **characterised in that** said first sound output aperture is arranged beside said hinge (153) and is directed sideways out from the terminal parallel to said hinge

20. The communication terminal as recited in claim 18, **characterised in that** a second sound output aperture (161) is formed in a first end portion of said hinge, adjacent to said first sound output aperture (156).

21. The communication terminal as recited in claim 11, **characterised in that** said speaker is coupled to said cavity through a sound opening which provides a connection which is sealed from the remainder of the terminal.

22. The communication terminal as recited in claim 2, **characterised in that** said cavity acts as a front volume resonator for said speaker.

23. The communication terminal as recited in claim 1, **characterised by** a clamshell type design, each of said terminal members carrying user interface portions.

24. The communication terminal as recited in claim 1, **characterised in that** said first terminal member is a terminal body carrying a user interface, and said second terminal member is a foldable protective cover.

## Patentansprüche

1. Kommunikationsendgerät (70), welches ein erstes Endgerätglied (71) und ein zweites Endgerätglied (72), eine Gelenkeinrichtung (73), die die Endgerätglieder verbindet, durch welche das Endgerät geklappt und entklappt werden kann, und einem Lautsprecher (74) umfasst, wobei die Gelenkeinrichtung einen Hohlraum (75) definiert zu welchem der Lautsprecher akustisch verbunden ist, wobei der Lautsprecher (74) in einem des ersten Endgerätglieds (71) oder des zweiten Endgerätglieds platziert ist, so dass der Lautsprecher zu dem Hohlraum (75) gekoppelt ist, **dadurch gekennzeichnet, dass** die akustische Verbindung zwischen dem Lautsprecher (74) und dem Hohlraum (75) so ist, dass es dem Lautsprecher (74) ermöglicht, innerhalb des Hohlraums (75) zu schwingen.

2. Kommunikationsendgerät nach Anspruch 1, **dadurch gekennzeichnet, dass** der Lautsprecher innerhalb des Hohlraums platziert ist.

3. Kommunikationsendgerät nach Anspruch 2, **dadurch gekennzeichnet, dass** der Hohlraum im Wesentlichen zylindrisch ist.

4. Kommunikationsendgerät nach Anspruch 2, **dadurch gekennzeichnet, dass** der Hohlraum von dem Rest des Endgeräts abgedichtet ist.

5. Kommunikationsendgerät nach Anspruch 2, **dadurch gekennzeichnet, dass** eine erste Geräuschausgangsapertur (76) in einem ersten Endteil des Gelenks gebildet ist.

6. Kommunikationsendgerät nach Anspruch 4, **dadurch gekennzeichnet, dass** der Lautsprecher gegenüberliegend zu der ersten Geräuschapertur platziert ist.

7. Kommunikationsendgerät nach Anspruch 4, **dadurch gekennzeichnet, dass** eine zweite Geräuschausgangsapertur (182) in einem zweiten Endteil des Gelenks gegenüberliegend zu dem ersten Endteil gebildet ist.

8. Kommunikationsendgerät nach Anspruch 7, **dadurch gekennzeichnet, dass** ein zweiter Lautsprecher (181) gegenüberliegend zu der zweiten Geräuschapertur platziert ist.

9. Kommunikationsendgerät nach Anspruch 2, **dadurch gekennzeichnet, dass** eine Geräuschausgangsapertur in einem Seitenteil des Gelenks gebildet ist.

10. Kommunikationsendgerät nach Anspruch 2, **dadurch gekennzeichnet, dass** ein Lautsprecher ein Lautsprecher eines stabförmigen Typs mit einer rechteckigen Membran ist.

11. Kommunikationsendgerät (10) nach Anspruch 1, **dadurch gekennzeichnet, dass** der Lautsprecher (14) außerhalb des Hohlraums (15) platziert ist, gekoppelt durch eine Geräuschöffnung zu dem Hohlraum.

12. Kommunikationsendgerät nach Anspruch 11, **dadurch gekennzeichnet, dass** die Geräuschöffnung eine Verbindung bereitstellt, welche von dem Rest des Endgeräts abgedichtet ist.

13. Kommunikationsendgerät nach Anspruch 1, **dadurch gekennzeichnet, dass** eine erste Geräuschausgangsapertur (118) in einem ersten Endteil des Gelenks gebildet ist.

14. Kommunikationsendgerät nach Anspruch 13, **dadurch gekennzeichnet, dass** eine zweite Geräuschausgangsapertur (119) in einem zweiten Endteil des Gelenks, gegenüberliegend zu dem ersten Endteil, gebildet ist.

15. Kommunikationsendgerät nach Anspruch 11, **dadurch gekennzeichnet, dass** eine Geräuschausgangsapertur (109) in einem Seitenteil des Gelenks (100) gebildet ist.

16. Kommunikationsendgerät (50) nach Anspruch 11, **dadurch gekennzeichnet, dass** der Lautsprecher (54) durch einen Rückseitenteil davon zu dem Hohlraum (55) gekoppelt ist.

17. Kommunikationsendgerät (10) nach Anspruch 11, **dadurch gekennzeichnet, dass** der Lautsprecher (14) durch einen Seitenteil davon zu dem Hohlraum (15) gekoppelt ist.

18. Kommunikationsendgerät (150) nach Anspruch 17, **dadurch gekennzeichnet, dass** der Lautsprecher (154) eine Membran umfasst, wobei eine Rückseite der Membran zu dem Hohlraum (155) gekoppelt ist und eine Vorderseite der Membran zu der Umgebung des Endgeräts durch eine erste Geräuschausgangsapertur (154) gekoppelt ist.

19. Kommunikationsendgerät nach Anspruch 18, **dadurch gekennzeichnet, dass** die erste Geräuschausgangsapertur neben dem Gelenk (153) angeordnet ist und seitwärts weg von dem Endgerät parallel zu dem Gelenk ausgerichtet ist.

20. Kommunikationsendgerät nach Anspruch 18, **dadurch gekennzeichnet, dass** eine zweite Geräuschausgangsapertur (161) in einem ersten Endteil des Gelenks, gegenüberliegend zu der ersten Geräuschausgangsapertur (156),gebildet ist.

21. Kommunikationsendgerät nach Anspruch 11, **dadurch gekennzeichnet, dass** der Lautsprecher zu dem Hohlraum durch eine Geräuschöffnung gekoppelt ist, welche eine Verbindung bereitstellt, welche von dem Rest des Endgeräts abgedichtet ist.

22. Kommunikationsendgerät nach Anspruch 2, **dadurch gekennzeichnet, dass** der Hohlraum als ein Vorderlautstärkenresonator für den Lautsprecher dient.

23. Kommunikationsendgerät nach Anspruch 1, **gekennzeichnet durch** ein Design eines Klapptyps, wobei jedes der Endgerätglieder Benutzerschnittstellenteile tragen.

24. Kommunikationsendgerät nach Anspruch 1, **dadurch gekennzeichnet, dass** das erste Endgerätglied ein Endgerätkörper ist, der eine Benutzerschnittstelle trägt, und das zweite Endgerätglied eine klappbare Schutzabdeckung ist.

## Revendications

1. Terminal de communication (70), comprenant un premier élément de terminal (71) et un second élément de terminal (72), un dispositif formant charnière (73) reliant lesdits éléments de terminal, au moyen duquel le terminal peut être plié et déplié, et un haut-parleur (74), dans lequel ledit dispositif formant charnière définit une cavité (75) à laquelle ledit haut-parleur est acoustiquement relié, dans lequel ledit haut-parleur (74) est placé soit dans ledit premier élément de terminal (71) soit dans ledit second élément de terminal de telle manière que le haut-parleur soit couplé à ladite cavité (75),
**caractérisé en ce que** la liaison acoustique entre le haut-parleur (74) et la cavité (75) est telle qu'elle permet au haut-parleur (74) de résonner à l'intérieur de ladite cavité (75).

2. Terminal de communication selon la revendication 1, **caractérisé en ce que** ledit haut-parleur est placé à l'intérieur de ladite cavité.

3. Terminal de communication selon la revendication 2, **caractérisé en ce que** ladite cavité est sensiblement cylindrique.

4. Terminal de communication selon la revendication 2, **caractérisé en ce que** ladite cavité est fermée hermétiquement par rapport au reste du terminal.

5. Terminal de communication selon la revendication 2, **caractérisé en ce qu'**une première ouverture de sortie acoustique (76) est formée dans une première partie d'extrémité de ladite charnière.

6. Terminal de communication selon la revendication 4, **caractérisé en ce que** ledit haut-parleur est placé de manière adjacente à ladite première ouverture acoustique.

7. Terminal de communication selon la revendication 4, **caractérisé en ce qu'**une seconde ouverture de sortie acoustique (182) est formée dans une seconde partie d'extrémité de ladite charnière, à l'opposé de ladite première partie d'extrémité.

8. Terminal de communication selon la revendication 7, **caractérisé en ce qu'**un second haut-parleur (181) est placé de manière adjacente à ladite seconde ouverture acoustique.

9. Terminal de communication selon la revendication 2, **caractérisé en ce qu'**une ouverture de sortie acoustique est formée dans une partie latérale de ladite charnière.

10. Terminal de communication selon la revendication 2, **caractérisé en ce que** ledit haut-parleur est un haut-parleur du type en forme de tige ayant une membrane rectangulaire.

11. Terminal de communication (10) selon la revendication 1, **caractérisé en ce que** ledit haut-parleur (14) est placé à l'extérieur de ladite cavité (15), couplé par une ouverture acoustique à ladite cavité.

12. Terminal de communication selon la revendication 11, **caractérisé en ce que** ladite ouverture acoustique constitue une liaison qui est fermée hermétiquement par rapport au reste du terminal.

13. Terminal de communication selon la revendication 11, **caractérisé en ce qu'**une première ouverture de sortie acoustique (118) est formée dans une première partie d'extrémité de ladite charnière.

14. Terminal de communication selon la revendication 13, **caractérisé en ce qu'**une seconde ouverture de sortie acoustique (119) est formée dans une seconde partie d'extrémité de ladite charnière, à l'opposé de ladite première partie d'extrémité.

15. Terminal de communication selon la revendication 11, **caractérisé en ce qu'**une ouverture de sortie acoustique (109) est formée dans une partie latérale de ladite charnière (100).

16. Terminal de communication (50) selon la revendication 11, **caractérisé en ce que** ledit haut-parleur (54) est couplé par une partie de dos de celui-ci à ladite cavité (55).

17. Terminal de communication (10) selon la revendication 11, **caractérisé en ce que** ledit haut-parleur (14) est couplé par l'intermédiaire d'une partie latérale de celui-ci à ladite cavité (15).

18. Terminal de communication (150) selon la revendication 17, **caractérisé en ce que** ledit haut-parleur (154) comprend une membrane, une face arrière de ladite membrane étant couplée à ladite cavité (155), et une face avant de ladite membrane étant couplée à l'extérieur du terminal par une première ouverture de sortie acoustique (154).

19. Terminal de communication selon la revendication 18, **caractérisé en ce que** ladite première ouverture de sortie acoustique est agencée à l'arrière de ladite charnière (153) et est dirigée latéralement vers l'extérieur du terminal parallèlement à ladite charnière.

20. Terminal de communication selon la revendication 18, **caractérisé en ce qu'**une seconde ouverture de sortie acoustique (161) est formée dans une première extrémité de ladite charnière, de manière adjacente à ladite première ouverture de sortie acoustique (156).

21. Terminal de communication selon la revendication 11, **caractérisé en ce que** ledit haut-parleur est couplé à ladite cavité par l'intermédiaire d'une ouverture acoustique qui assure une liaison fermée hermétiquement par rapport au reste du terminal.

22. Terminal de communication selon la revendication 2, **caractérisé en ce que** ladite cavité joue le rôle de résonateur de volume avant pour ledit haut-parleur.

23. Terminal de communication selon la revendication 1, **caractérisé en ce qu'**il présente un design du type à double coque, chacun desdits éléments de terminal portant des parties d'une interface utilisateur.

24. Terminal de communication selon la revendication 1, **caractérisé en ce que** ledit premier élément de terminal est un corps de terminal portant une interface utilisateur, et **en ce que** ledit second élément de terminal est un capot protecteur pliant.
